# EUROPEAN PATENT APPLICATION

(11) **EP 4 769 118 A1**
(43) Date of publication of application: **01.07.2026**
(21) Application number: 25226441.1
(22) Date of filing: 22.12.2025
(51) Int. Cl.: G06F 7/58, G06N 10/60

(54) **SYSTEMS AND METHODS FOR OBTAINING RANDOM NUMBERS USING QUANTUM-INSPIRED SIMULATIONS OF QUANTUM ANNEALING**

(30) Priority: 31.12.2024 US 202463740734 P; 15.09.2025 US 202519329020; 10.11.2025 WO PCT/CA2025/051487
(71) Applicant: Multiverse Computing Inc., Toronto, ON M5C 2T2 (CA)
(72) Inventor: AIZPURUA, Borja, Toronto, Ontario, M5T 3A4 (CA); SINGH, Sukhbinder, Toronto, Ontario, M5T 3A4 (CA); ORUS, Roman, Toronto, Ontario, M5T 3A4 (CA)
(74) Representative: Balder IP Law, S.L.

(57) **Abstract**

Random number generation is crucial in applications such as cryptography, simulations, and statistical sampling. However, traditional methods often rely on algorithmic processes, which may not provide true randomness. An example solution may provide a computer-implemented method including: receiving a data set, a processing time, and a state count; executing one or more simulations of a quantum adiabatic process based on the data set, the processing time, the state count, an energy function, and one or more network structures, the one or more network structures including a representation of one or more initial simulated quantum bits; measuring one or more simulated values based on the one or more evolved simulated quantum bits at the end of each simulation; and outputting one or more output values based on the one or more simulated values, the one or more output values including one or more classical bit.

## Description

### FIELD

The present disclosure generally relates to the field of quantum computing, and in particular to quantum-inspired classical simulations of quantum annealers.

### INTRODUCTION

Quantum computing and quantum simulations have been a topic of interest in the field of computer science and physics for several years. Quantum annealing, a particular type of quantum computing, has been studied for its potential applications in optimization problems and other complex computations. Quantum annealing uses quantum fluctuations to find the minimum of a given function, which is often used in solving optimization problems. However, the practical implementation of quantum annealing is challenging due to the need for maintaining quantum coherence and controlling quantum states.

Furthermore, the generation of random numbers is a crucial aspect in various applications such as cryptography, simulations, and statistical sampling. Traditional methods of generating random numbers often rely on algorithmic processes, which may not provide true randomness. Therefore, there is a continuous search for more efficient and reliable methods for random number generation.

### SUMMARY

In accordance with an aspect of this disclosure, there is provided a system for generating random numbers. The system includes one or more processors, the one or more processors configured to implement a data input module. The data input model is configured to receive: a data set; a processing time; and a state count. The one or more processors are further configured to implement a quantum-inspired classical simulation device. The quantum-inspired classical simulation device is configured to execute one or more simulations of a quantum adiabatic process based on the data set, the processing time, the state count, an energy function, and one or more network structures. The one or more network structures include one or more initial simulated quantum bits, thereby producing one or more evolved simulated quantum bits. The one or more processors are further configured to implement a data readout module. The data readout module is configured to measure one or more simulated values based on the one or more evolved simulated quantum bits at the end of each simulation of the quantum adiabatic process. The one or more processors are further configured to implement a data output module. The data output model is configured to output one or more output values based on the one or more simulated values, the one or more output values including one or more classical bits.

In some embodiments, the data set includes a set of numbers corresponding to a plurality of local magnetic fields to be applied to the one or more simulated quantum bits.

In some embodiments, the state count is used to determine a quantity of the one or more simulations to be executed, the quantum-inspired classical simulation device configured to execute each of the one or more simulations with a different random seed.

In some embodiments, the one or more network structures include one or more tensor networks.

In some embodiments, the adiabatic process includes an imperfect adiabatic evolution.

In some embodiments, the energy function includes a Hamiltonian, the Hamiltonian including only local magnetic fields in a single direction.

In some embodiments, the one or more output values includes a random string of classical bits.

In some embodiments, the one or more tensor networks includes one or more of: Matrix Product States, Projected Entangled Pair States, and Lattice-Free Tensor Networks.

In some embodiments, the executing the one or more simulations of the quantum adiabatic process includes: initializing the one or more network structures based on the one or more simulated quantum bits, the energy function, the data set, an initialization weight associated with the energy function, and a problem weight associated with the data set; applying one or more tensor network evolution algorithms to the one or more network structures with the initialization weight at a first value and the problem weight at a second value; and applying the one or more tensor network evolution algorithms to the one or more network structures with the first weight at a third value, the third value being lower than the first value, and the problem weight at a fourth value, the fourth value being lower than the third value, and wherein: the one or more simulations includes a number of simulations, the number corresponding to the state count; and the first weight, second weight, third weight, and fourth weight are determined based on the processing time.

In some embodiments, the one or more tensor network evolution algorithms includes at least one of: simple and full update of tensors, time-evolving block decimation, time-dependent DMRG, and tangent space methods.

In accordance with another aspect of this disclosure, there is provided a computer-implemented method for generating random numbers. The method includes receiving, at a data input module, a data set, a processing time, and a state count. The method also includes executing, at a quantum-inspired classical simulation device, one or more simulations of a quantum adiabatic process based on the data set, the processing time, the state count, an energy function, and one or more network structures, the one or more network structures including a representation of one or more initial simulated quantum bits, thereby producing one or more evolved simulated quantum bits. The method further includes measuring, at a data readout module, one or more simulated values based on the one or more evolved simulated quantum bits at the end of each simulation of the quantum adiabatic process. The method further includes outputting, at a data output module, one or more output values based on the one or more simulated values, the one or more output values including one or more classical bit.

In some embodiments, the data set includes a set of numbers corresponding to a plurality of local magnetic fields to be applied to the one or more simulated quantum bits.

In some embodiments, the state count is used to determine a quantity of the one or more simulations to be executed, the quantum-inspired classical simulation device configured to execute each of the one or more simulations with a different random seed.

In some embodiments, the one or more network structures includes one or more tensor networks.

In some embodiments, the adiabatic process includes an imperfect adiabatic evolution.

In some embodiments, the energy function includes a Hamiltonian, the Hamiltonian includes only local magnetic fields in a single direction.

In some embodiments, the one or more output values includes a random string of classical bits.

In some embodiments, the one or more tensor networks includes one or more of: Matrix Product States, Projected Entangled Pair States, and Lattice-Free Tensor Networks.

In some embodiments, the executing the one or more simulations of the quantum adiabatic process includes: initializing the one or more network structures based on the one or more simulated quantum bits and the energy function, the data set, an initialization weight associated with the energy function, and a problem weight associated with the data set; and applying one or more tensor network evolution algorithms to the one or more network structures with the initialization weight at a first value and the problem weight at a second value, and applying the one or more tensor network evolution algorithms to the one or more network structures with the first weight at a third value, the third value being lower than the first value, and the problem weight at a fourth value, the fourth value being lower than the third value, and wherein: the one or more simulations includes a number of simulations, the number corresponding to the state count; and the first weight, second weight, third weight, and fourth weight are determined based on the processing time.

In some embodiments, the one or more tensor network evolution algorithms includes at least one of: simple and full update of tensors, time-evolving block decimation, time-dependent DMRG, and tangent space methods.

### DRAWINGS

Several embodiments will be described in detail with reference to the drawings, in which:
FIG. 1 shows a flowchart of a method for generating random numbers; and
FIG. 2 shows a schematic diagram of a system for generating random numbers.

The drawings are provided for purposes of illustration, and not of limitation, of the aspects and features of various examples of embodiments described herein. For simplicity and clarity of illustration, elements shown in the drawings have not necessarily been drawn to scale. The dimensions of some of the elements may be exaggerated relative to other elements for clarity. It will be appreciated that for simplicity and clarity of illustration, where considered appropriate, reference numerals may be repeated among the drawings to indicate corresponding or analogous elements or steps.

### DESCRIPTION OF VARIOUS EMBODIMENTS

Various embodiments in accordance with the teachings herein will be described below to provide an example of at least one embodiment of the claimed subject matter. No embodiment described herein limits any claimed subject matter. The claimed subject matter is not limited to devices, systems, or methods having all of the features of any one of the devices, systems, or methods described below or to features common to multiple or all of the devices, systems, or methods described herein. It is possible that there may be a device, system, or method described herein that is not an embodiment of any claimed subject matter. Any subject matter that is described herein that is not claimed in this document may be the subject matter of another protective instrument, for example, a continuing patent application, and the applicants, inventors, or owners do not intend to abandon, disclaim, or dedicate to the public any such subject matter by its disclosure in this document.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures, and components have not been described in detail so as not to obscure the embodiments described herein. Also, the description is not to be considered as limiting the scope of the embodiments described herein.

It should also be noted that the terms "coupled" or "coupling" as used herein can have several different meanings depending in the context in which these terms are used. For example, the terms coupled or coupling can have a mechanical or electrical connotation. For example, as used herein, the terms coupled or coupling can indicate that two elements or devices can be directly connected to one another or connected to one another through one or more intermediate elements or devices via an electrical signal, electrical connection, or a mechanical element depending on the particular context.

It should also be noted that, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

It should be noted that terms of degree such as "substantially", "about" and "approximately" as used herein mean a reasonable amount of deviation of the modified term such that the end result is not significantly changed. These terms of degree may also be construed as including a deviation of the modified term, such as by 1%, 2%, 5%, or 10%, for example, if this deviation does not negate the meaning of the term it modifies.

Furthermore, the recitation of numerical ranges by endpoints herein includes all numbers and fractions subsumed within that range (e.g., 1 to 5 includes 1, 1.5, 2, 2.75, 3, 3.90, 4, and 5). It is also to be understood that all numbers and fractions thereof are presumed to be modified by the term "about" which means a variation of up to a certain amount of the number to which reference is being made if the end result is not significantly changed, such as 1%, 2%, 5%, or 10%, for example.

It should also be noted that the use of the term "window" in conjunction with describing the operation of any system or method described herein is meant to be understood as describing a user interface for performing initialization, configuration, or other user operations.

The example embodiments of the devices, systems, or methods described in accordance with the teachings herein may be implemented as a combination of hardware and software. For example, the embodiments described herein may be implemented, at least in part, by using one or more computer programs, executing on one or more programmable devices comprising at least one processing element and at least one storage element (i.e., at least one volatile memory element and at least one non-volatile memory element). The hardware may comprise input devices including at least one of a touch screen, a keyboard, a mouse, buttons, keys, sliders, and the like, as well as one or more of a display, a printer, and the like depending on the implementation of the hardware.

It should also be noted that there may be some elements that are used to implement at least part of the embodiments described herein that may be implemented via software that is written in a high-level procedural language such as object-oriented programming. The program code may be written in C⁺⁺, C#, JavaScript, Python, or any other suitable programming language and may comprise modules or classes, as is known to those skilled in object-oriented programming. Alternatively, or in addition thereto, some of these elements implemented via software may be written in assembly language, machine language, or firmware as needed. In either case, the language may be a compiled or interpreted language

At least some of these software programs may be stored on a computer readable medium such as, but not limited to, a ROM, a magnetic disk, an optical disc, a USB key, and the like that is readable by a device having a processor, an operating system, and the associated hardware and software that is necessary to implement the functionality of at least one of the embodiments described herein. The software program code, when read by the device, configures the device to operate in a new, specific, and predefined manner (e.g., as a specific-purpose computer) in order to perform at least one of the methods described herein.

At least some of the programs associated with the devices, systems, and methods of the embodiments described herein may be capable of being distributed in a computer program product comprising a computer readable medium that bears computer usable instructions, such as program code, for one or more processing units. The medium may be provided in various forms, including non-transitory forms such as, but not limited to, one or more diskettes, compact disks, tapes, chips, and magnetic and electronic storage. In alternative embodiments, the medium may be transitory in nature such as, but not limited to, wire-line transmissions, satellite transmissions, internet transmissions (e.g., downloads), media, digital and analog signals, and the like. The computer useable instructions may also be in various formats, including compiled and non-compiled code.

The generation of random numbers may be used in various applications such as cryptography, simulations, and statistical sampling. Traditional methods of generating random numbers may include using classical algorithmic processes, which may not provide true randomness. Quantum annealing is a quantum computing technique that may be used to generate random numbers. However, quantum annealing is difficult to implement due to requiring costly quantum computing hardware. Additionally, outputs may be noisy due to the difficulty of maintaining quantum coherence and controlling quantum states in quantum computers.

The present disclosure describes systems and methods of simulating quantum annealing using classical computing hardware to perform random number generation, thereby removing the need to use a quantum computer, and removing associated difficulties with operating the quantum computer.

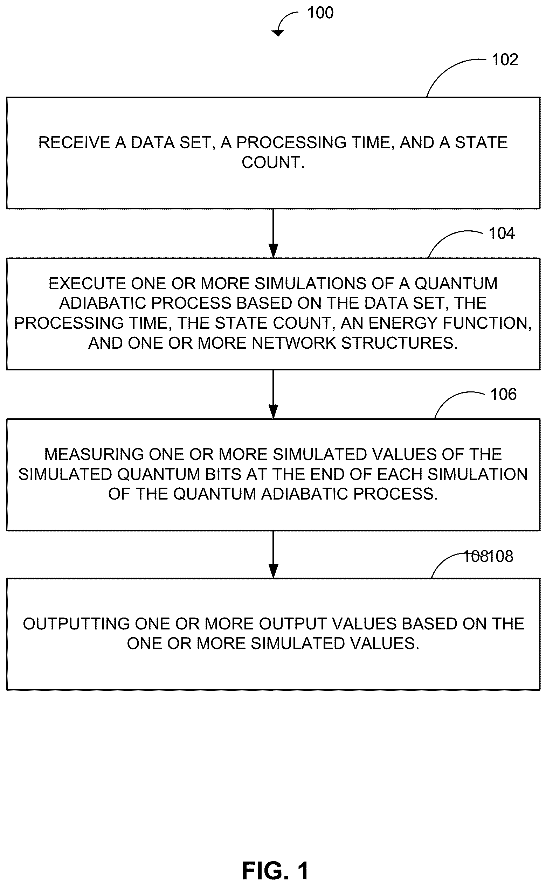

Reference is first made to FIG. 1, which shows a method 100 for generating random numbers. The method begins at 102 with receiving, at a data input module, a data set, a processing time, and a state count. For example, data may be entered into the system consisting of a set of numbers, an annealing time, and a number of ground states. This step sets the parameters for a subsequent simulation. The data input module receives and processes the initial conditions for the simulation, which directly influences the behavior and outcome of the simulation.

In some embodiments, the data set may be a set of numbers. The set of numbers may represent local magnetic fields that will be applied to each qubit in the simulation. These local magnetic fields define the energy landscape of the quantum system and thus the evolution of the qubits' states during the simulation. For example, the set of numbers may be used to characterize an Ising model, specifically, to define a Hamiltonian for the Ising model. As will be discussed in further detail below, the set of numbers may also refer to parameters defining the strengths and/or orientations or possible orientations of the local fields applied to simulated qubits.

In some embodiments, the processing time may be an annealing time, which corresponds to a duration over which the simulation will run. The annealing time may determine the rate at which the system evolves from an initial state to a final state and is a key factor in the process that the simulation aims to replicate. For example, the processing time may determine a schedule that determines the rate of interpolation between an initial Hamiltonian and a problem Hamiltonian during annealing. The schedule may correspond to a linear rate or a more complex non-linear rate, either of which can be used for the purposes of annealing.

In some embodiments, the state count may correspond to a number of ground states that a simulator performing the simulation is expected to sample. The state count may affect the diversity of the final output, as sampling multiple ground states can lead to a higher quality of randomness in the generated numbers. In some embodiments, sampling multiple ground states may include performing the same simulation multiple times with different random seeds. For example, the state count may determine a quantity of the one or more simulations to be executed. The simulation device (e.g., a quantum-inspired classical simulation device) may be configured to execute each of the one or more simulations with a different random seed. While input data remains the same, the simulation may be probabilistic, and so each execution may yield a different ground state. This variability may enhance the diversity and quality of the generated randomness.

It will be appreciated that sampling multiple ground states may not involve changing the initial conditions or simulating more qubits. Instead, and as noted above, sampling multiple ground states may involve re-running the same simulation multiple times, such as with different random seeds, to capture different probabilistic outcomes. Each run may collapse to a different ground state due to the probabilistic nature of the simulation. The state count may control how many such runs are performed, which in turn may affect the variability and quality of the random numbers generated. In summary, the state count may determine a number of repeated simulations with varying random seeds, which may enable the system to sample different ground states and improve the randomness in the output.

In some embodiments, the data set, the processing time, and the state count may all be derived from a seed. The seed may be received from a human user. For example, the data input module may receive an input number from the user. From this seed, the user may derive the data set, the annealing time, and the state count, using various known algorithms for generating sets of numbers from seeds. For example, the seed may be any user-provided number or string, such as a timestamp, a passphrase, or a hardware-based random input. Other examples of a seed may also be possible. The seed may be expanded deterministically, such as by using a pseudorandom number generator (PRNG), e.g. a standard PRNG. In some examples of expanding the seed deterministically, the PRNG may produce a data set (e.g., a list of local magnetic field values for simulated qubits), a processing time (e.g., mapped to an annealing duration or schedule) and a state count (e.g., specifying how many times to run the simulation for sampling). This approach may allow reproducibility while preserving randomness. It will be appreciated that this approach may be used commonly in cryptographic applications, procedural generation or randomized simulations.

The input parameters may define the magnetic fields acting on qubits, the time over which the system will evolve, and the number of solutions or ground states that will be considered in the simulation. These parameters facilitate the simulator in accurately replicating the behavior of a quantum annealer and produce random numbers.

The method proceeds at 104 with executing, at a quantum-inspired classical simulation device, one or more simulations of a quantum adiabatic process based on the data set, the processing time, the state count, an energy function, and one or more network structures, the one or more network structures comprising a representation of one or more initial simulated quantum bits, thereby producing one or more evolved simulated quantum bits. The quantum-inspired classical simulation device may be configured to execute a simulation that mirrors the behavior of a quantum annealer through a quantum adiabatic process using classical computing hardware. The quantum adiabatic process may be a process that does not perfectly maintain the ground state of the system, such as an imperfect adiabatic evolution, which is a computational approximation of the quantum annealing process. The simulation device may carry out the quantum adiabatic process by gradually changing the system's Hamiltonian while attempting to keep the system in its ground state. For example, the rate of change of the Hamiltonian may be determined by an annealing schedule. The annealing schedule may be determined from the processing time received at step 102. The generation of the annealing schedule from the processing time may be performed such that the system evolves at a sufficiently quick rate so that it is mostly adiabatic, but does not necessarily maintain its ground state at all times, making it imperfectly adiabatic.

In some embodiments, the energy function may be a Hamiltonian. The Hamiltonian used in this simulation may be a mathematical representation that describes the total energy of the system. In particular, the Hamiltonian may be focused solely on the effects of local magnetic fields acting in the Z direction on the qubits. In alternate embodiments, the local magnetic fields may act on another direction of the qubits. The Hamiltonian may be based on the data set. For example, the local magnetic fields represented by the Hamiltonian may correspond to the set of numbers in the dataset that was entered into the system in step 102.

It will be understood that the initial data set received at step 102 may be used to generate the problem Hamiltonian. The initial Hamiltonian may be predefined and not derived from the data set. As well, the initial Hamiltonian may be simple and may represent local magnetic fields (e.g. all in the Z direction), initializing the system in a known ground state (e.g. all spins aligned). In addition, the problem Hamiltonian may encode the randomness with local magnetic field values derived from the data set (which may be seeded). The problem Hamiltonian may also determine the final distribution of outputs. During simulation, the system may evolve from the initial Hamiltonian to the problem Hamiltonian according to an annealing schedule derived from the processing time. This final measured state may depend on this annealing path and may vary between runs, especially when the evolution is not perfectly adiabatic.

In some embodiments, the one or more network structures may comprise tensor networks, which are mathematical constructs that efficiently represent and compute the state of a quantum system. Tensor networks enable the simulation of the system's dynamics using established computational algorithms, such as the update of tensors, block decimation, methods related to density matrix renormalization group (DMRG), and tangent space. These algorithms manipulate the tensor network to simulate the evolution of the system over time. The tensor network may represent the state of the one or more simulated quantum bits in an initial state, and, after evolution of the tensor network, at an evolved state.

The tensor networks can include Matrix Product States, Projected Entangled Pair States (PEPS), Flexible-PEPS, and any other suitable type of tensor network capable of truncating correlations within the system for approximating quantum interactions.

The execution of the one or more simulations of the quantum adiabatic process may involve initializing the one or more network structures (e.g., tensor networks) based on one or more of the simulated quantum bits, the energy function, the data set, and time-dependent weights. For example, time-dependent weights may include an initialization weight associated with the energy function, and a problem weight associated with the data set. The simulation may begin by encoding both an initial Hamiltonian and a problem Hamiltonian as Matrix Product Operators (MPOs), which may then be applied to a tensor network such as a Matrix Product State (MPS). The initial Hamiltonian may represent a known, easily-preparable ground state (e.g., uniform Z-field), while the problem Hamiltonian, derived from the data set, introduces local fields encoding randomness. Time-varying interpolation weights may be assigned to these Hamiltonians to guide the adiabatic evolution from the initial to the problem configuration. In particular, as the magnitudes of the initial Hamiltonian and problem Hamiltonian will change over the course of annealing, time-varying weights may be associated with each of the Hamiltonians.

As used herein, the term "one or more simulations" may support the ability to sample multiple ground states, as will be discussed in further detail below. The initial conditions (i.e., the Hamiltonians and annealing schedule) may be fixed per run and not varied between simulations. However, the simulation may be probabilistic, and each run may yield a different low-energy (or ground) state due to imperfections in the adiabatic process and inherent randomness in the measurement. Therefore, sampling multiple ground states may usually include executing the same simulation multiple times, each with potentially different random outcomes. However, sampling multiple ground states may typically not include changing the input setup.

In some embodiments, the state count may determine a quantity of the one or more simulations to be executed. The quantum-inspired classical simulation device may be configured to execute each of the one or more simulations with a different random seed.

It will also be appreciated that sampling multiple simulated qubits within a single run may yield multiple classical bits. However, this may not be the same as sampling multiple distinct ground states of the system. A single run may yield a single many-qubit state (possibly one ground state), and repeating the run may provide diversity across ground states.

As noted above, in some embodiments, the execution of the one or more simulations of the quantum adiabatic process may involve initializing the one or more network structures (e.g., tensor networks) based on one or more of the simulated quantum bits, the energy function, the data set, and time-dependent weights. In this context, the term "energy function" may refer to the problem Hamiltonian, as this problem Hamiltonian is derived from the data set and is varied during simulation to influence the final quantum state. However, it will also be understood that the simulation may involve both an initial Hamiltonian and a problem Hamiltonian, which may be interpolated over time using an annealing schedule. The initial Hamiltonian typically may be fixed and not derived from the data set.

Next, the execution may involve applying one or more time-evolution processes to the one or more network structures with the initialization weight at a first value and the problem weight at a second value. For example, at the start of annealing, weights may be set at a high number for the initial Hamiltonian as it has high strength and a low number for the problem Hamiltonian as it has low strength. As used herein, the term "time-evolution processes" may be used interchangeably with "tensor network evolution algorithms" and "tensor network simulation algorithms", and these terms may include methods like time-evolving block decimation (TEBD), time-dependent density matrix renormalization group (t-DMRG), and simple/full update, which may be used to simulate time evolution or to optimize the network as it evolves. A technique such as TEBD may be used to determine the time-evolution of the tensor network to determine the state of the qubits at this stage of annealing.

Next, the execution may involve applying one or more time-evolution processes to the one or more network structures with the first weight at a third value, the third value being lower than the first value, and the problem weight at a fourth value, the fourth value being lower than the third value. For example, at a later stage of annealing, the weights may be set at a lower number for the initial Hamiltonian as it has decreased strength and a higher number for the problem Hamiltonian as it has increased strength. TEBD may then be used to determine the time-evolution of the tensor network to determine the updated state of the qubits at this later stage of annealing.

The first weight, second weight, third weight, and fourth weight may be determined based on the processing time. For example, the difference between the first weight and the third weight for the initial Hamiltonian, as well as the second weight and fourth weight for the problem Hamiltonian, may be determined based on the annealing schedule, which is determined from the processing time input at step 102. It will be appreciated that the different weights may reflect the annealing schedule, representing the time-variance in strength of the initial Hamiltonian and the problem Hamiltonian over time. The different weights may also control the interpolation between the initial Hamiltonian and problem Hamiltonian over time. For example, the initial Hamiltonian may start with a high weight (e.g. the first weight) and decrease (e.g. the third weight). The problem Hamiltonian may start with a low weight (e.g. the second weight) and increase (e.g. the fourth weight). These weights may be determined from the processing time identified at step S102, which may define how quickly or slowly the annealing takes place, such as via a linear or non-linear schedule. The simulation may evolve the system by gradually shifting dominance from the initial Hamiltonian to the problem Hamiltonian, emulating quantum annealing.

By conducting this simulation, the system generates data that, when measured at the end of the simulation, can be transformed into a string of classical bits. The introduction of imperfections in the adiabatic process contributes to variability of the output classical bits, which may then be used for applications that require random number generation.

The method proceeds at 106 with measuring, at a data readout module, one or more simulated values of the one or more evolved simulated quantum bits at the end of each simulation of the quantum adiabatic process. The measurement may facilitate a transition from a state in the quantum-inspired simulation to a state that can be interpreted in classical terms. For example, the data readout module may capture the final state of the simulated qubits after the simulation has completed its evolution. The module may then interpret the quantum states of the simulated qubits and convert them into a readable format. The purpose of this step is to extract the outcome of the simulation, which may produce the final output data.

The data readout module may measure the state of the simulated qubits at the end of the simulation to determine the values of the simulated qubits. The measurement process translates quantum probabilities into definite classical outcomes. This step is probabilistic, and the randomness generated through the process allows the system to produce random numbers. The measurement may be influenced by quantum state probabilities, which may be determined by the energy function and the data set in step 102. For example, the simulation's evolution may be influenced by the local magnetic fields in the Z direction as specified by the energy function, as well as the influence of local magnetic fields in random directions as specified by the data set.

At the end of the simulation, the measurement may reflect the influence of both the initial Hamiltonian and the problem Hamiltonian. Early in the annealing process, the initial Hamiltonian may dominate, setting a known starting state. As time progresses, the influence of the initial Hamiltonian may decrease, while the problem Hamiltonian (which may be derived from the data set and encoding random local magnetic fields) may become dominant. By the end of the simulation, primarily the problem Hamiltonian may shape the quantum state and hence the measured classical outcomes, introducing the intended randomness.

It will be appreciated that the final simulated state for each qubit may not be a single probably but rather a full quantum state (e.g., a superposition or reduced density matrix) from which measurement probabilities can be computed. The simulation (e.g., via MPS) may give the full quantum state of the system. For example, the final state of each simulated qubit at the end of the simulation may be used to compute a probability of measuring a 0 or a 1. A random sample may then be drawn based on this probability, yielding a classical bit (0 or 1) as output. The resulting classical bit value may be used as the output of the system.

To this end, the data readout module may perform the measurement of the simulated qubits' values at the end of the simulation's evolution. This measurement facilitates the converting of the quantum information into a classical state that can be used to generate a string of classical bits, fulfilling the system's purpose of producing random numbers.

The method proceeds, at step 108, with outputting, at a data output module, one or more output values based on the one or more simulated values. The outputting may include assembling classical bits into an output string, performing any final processing (e.g., bit formatting, post selection, validation), and/or delivering or exporting the result to a downstream system or interface. As already discussed above, the data readout module may perform the measurement of quantum information, and so the data output module may convert this measured information into a string of classical bits. The data readout module may have performed this measurement by measuring the state of the simulated qubits, which have been processed through the simulation of quantum annealing. The measurement process is probabilistic, reflecting the quantum nature of the qubits' state at the end of the simulation. The data output module may subsequently convert those measured values into classical bits, e.g., by probabilistic sampling and assembly of the results into a bit string. The output is a sequence of bits that is intended for use in applications that require a degree of randomness.

The data output module may specify the nature of the output from the simulation. The data output module may ensure that the process of translating the measured quantum state into a classical bit string maintains the randomness from the quantum measurement outcomes. The module may translate the outcomes of the qubit measurements into a sequence of 0s and 1s, which are the classical bits. Randomness arises from the probability distribution of the qubit's state prior to measurement, which is a fundamental aspect of quantum mechanics.

To this end, the outputting focuses on the final transformation of the simulated qubits' state, measured by the data readout module, into a usable format. The useable format, generated by the data output module, may be a sequence of bits that can be interpreted and utilized outside of the simulation environment. The process is designed to capture the inherent randomness of the quantum state within the classical output, ensuring that the sequence of bits can serve its intended purpose in subsequent applications.

For the avoidance of any doubt, it will be appreciated that the data readout module may be responsible for performing the measurement of the evolved quantum state. This may include computing and sampling from the quantum-derived probability distributions to obtain raw classical bit values. The data output module may be understood as handling the final formatting and delivery of the classical output bits, after measurement has occurred. For example, the data output module may assemble the bits into an output string, perform any final processing (e.g., bit formatting, post-selection, validation), and/or delivery or exporting of the result to a downstream system or interface.

As described in step 104, the execution of the simulation involves the utilization of a quantum-inspired classical simulation device. The quantum-inspired classical simulation device may be inspired by quantum annealing principles and may operate on the basis of tensor networks such as Matrix Product States, Projected Entangled Pair States, and Lattice-Free Tensor Networks. The simulator is designed to perform computations to mimic the behavior of a quantum annealer, which may be used for generating random numbers.

The simulation device may execute complex computations on classical computing hardware. The classical computing hardware may contain processors and memory and may be configured to run software that implement tensor network algorithms. These algorithms may be structured to represent and manipulate quantum states, despite being executed on non-quantum hardware. The goal is to approximate the quantum annealing process, where a Hamiltonian is varied to find a ground state that encodes the solution to a given problem.

The simulation device may approximate the outcomes of a quantum annealer without requiring a physical quantum computer. The simulation device may allow for the application of quantum algorithms on classical systems, such as the generation of random numbers. The simulation device may employ tensor network techniques to replicate quantum behaviors, which may involve updating the state of the system as it evolves. These updates may be performed using methods such as simple and full update of tensors, time-evolving block decimation, time-dependent DMRG, and tangent space methods. These methods may be techniques for updating the state of the system, aiming to maintain accuracy and computational efficiency throughout the simulation process.

To this end, tensor networks may be used in simulations to produce random numbers. The process involves computations that are based on the principles of quantum annealing, executed on classical hardware, and structured through the manipulation of tensors within the network, following established procedures in the field of quantum simulation.

The simulation device may use tensor network evolution algorithms to simulate the dynamics of a quantum system. These procedures may facilitate replicating the behavior of a quantum annealer within a classical computing framework. As noted above, the term "tensor network evolution algorithms" may be used interchangeably with "tensor network simulation algorithms". These terms may also be used interchangeably with "time-evolution processes". These terms may include methods like TEBD, t-DMRG, and simple/full update, which may be used to simulate time evolution or to optimize the network as it evolves. These algorithms may not simply evolve the quantum state over time, but may also manage truncation entanglement, and numerical stability, which may be crucial for meaningful simulation.

The simulation devices may use tensor network methods to simulate the time evolution of a quantum system. The tensor networks, which are mathematical constructs representing the quantum state, evolve over time according to the Hamiltonian of the system, which includes only local magnetic fields in the Z direction. The goal is to mimic the behavior of a quantum annealer to facilitate the generation of random numbers. It will be appreciated that this Hamiltonian may be understood as the problem Hamiltonian, which may, for example, have magnetic fields in the Z direction derived from the data set. While the initial Hamiltonian might also have local fields in a single direction, the initial Hamiltonian is typically fixed and generic (e.g., a transverse field or uniform set up), compared to the problem Hamiltonian which may be constructed from the data set.

As noted above, tensor network evolution algorithms (e.g. time-evolution processes) may encompass methods such as simple and full update of tensors, TEBD, t-DMRG, and tangent space methods. These techniques are utilized to update the tensors representing the quantum state as the simulation progresses. The tensors and the algorithms that govern their evolution are involved in this process. These procedures are selected for their efficiency and accuracy in simulating the dynamics of quantum systems.

The simple update of tensors and full update of tensors technique may be used to update the tensors during the simulation. The simple update technique may be used to approximate the evolution of the system, and the full update of tensors technique may be used to provide a more accurate representation of the evolution of the system.

TEBD is a numerical technique for simulating the time evolution of one-dimensional quantum systems with nearest-neighbor interactions. It is particularly applicable for systems that can be represented as MPS.

t-DMRG extends the DMRG method to time-dependent problems and is used to simulate the dynamics of quantum systems, especially in one-dimensional systems or systems that can be mapped to one dimension.

Tangent Space Methods involve manipulating the tangent space of the manifold on which the tensor network state resides. These methods are used for simulating time evolution and for optimizing tensor networks to represent ground states and low-energy excitations.

These methods may be implemented on any processing device capable of executing algorithms that operate on data structures representing the tensor networks. The simulation may be, for example, executed on computers using software designed to perform the complex calculations required. The outcome is a final state of the tensor network that corresponds to the ground state of the quantum system, from which random numbers can be generated. The accuracy and efficiency of these methods ensure that the random numbers produced meet the desired specifications and are generated within an acceptable timeframe.

This step is the practical application of the quantum-inspired simulation system for producing numbers. The numbers generated are random, which is suitable for applications such as cryptography and statistical sampling.

The process begins with the data input module, which receives and processes the initial conditions for the simulation, including the set of numbers corresponding to local magnetic fields, the annealing time, and the number of ground states to be sampled. These parameters define the starting point and the constraints within which the quantum-inspired simulation operates.

As used herein, the set of numbers corresponding to a plurality of local magnetic fields may refer to the parameters that define the problem Hamiltonian. For example, the set of numbers corresponding to a plurality of local magnetic fields may refer to the strengths and/or orientations or possible orientations of the local fields applied to the simulated qubits.

The quantum-inspired classical simulation device performs the simulation of an imperfect adiabatic evolution, which is based on tensor networks. The imperfection in the adiabatic process and the Hamiltonian consisting only of local magnetic fields in the Z direction influence the behavior and the outcome of the simulated quantum bits.

After the simulation, the data readout module measures the value of the simulated qubits at the end of the evolution. This measurement captures the final quantum state, which is used to generate the output data.

The data output module converts the readout from the simulated qubits into a string of classical bits, which are the random numbers produced by the system.

The process is facilitated by the quantum-inspired simulator, which is based on tensor networks like Matrix Product States, Projected Entangled Pair States, and Lattice-Free Tensor Networks. The simulation of quantum system dynamics follows standard procedures in tensor networks, such as simple and full update of tensors, time-evolving block decimation, time-dependent DMRG, and tangent space methods, ensuring the accuracy and reliability of the simulation.

In summary, the previous steps come together to generate random numbers using the quantum-inspired simulation of a quantum annealer. The random numbers produced are the result of the interplay of the methods, parameters, and the simulation methods employed.

In some further embodiments of method 100, executing the one or more simulations of the quantum adiabatic process in step 104 may include initializing the one or more network structures based on the one or more simulated quantum bits, the energy function, the data set, an initialization weight associated with the energy function, and a problem weight associated with the data set. This step may be understood as initializing the tensor network (for example, an MPS representing the qubit system), along with MPOs representing the Hamiltonians. The initial Hamiltonian and the problem Hamiltonian may both be encoded as MPOs, and each may be associated with a weight that controls its contribution to the total effective Hamiltonian at a given point in time. These two weights may correspond to the initialization weight (for the initial Hamiltonian) and the problem weight (for the data-derived problem Hamiltonian). As annealing progresses, these weights may vary according to the annealing schedule, gradually shifting the system from being dominated by the initial Hamiltonian to being governed by the problem Hamiltonian. This may form the basis for the imperfect adiabatic evolution simulated by the system.

Executing the one or more simulations of the quantum adiabatic process may further include applying one or more tensor network evolution algorithms applying one or more time-evolution processes to the one or more network structures with the initialization weight at a first value and the problem weight at a second value. In some embodiments, applying the one or more tensor network evolution algorithms may include simulating time evolution of the network structure or applying one or more time evolution processes to the one or more network structures. The use of methods like TEBD, t-DMRG or similar methods may allow for the evolution of a quantum state over discrete steps.

Executing the one or more simulations of the quantum adiabatic process may further include applying one or more time-evolution processes to the one or more network structures with the first weight at a third value, the third value being lower than the first value, and the problem weight at a fourth value, the fourth value being lower than the third value.

It will be appreciated that TEBD and similar methods simulate time evolution by applying small time steps of a time-dependent Hamiltonian to a tensor network (like an MPS). To model annealing, where the total Hamiltonian changes over time (from initial to problem), the tensor network may not need to be re-initialized at each step. Instead, the effective Hamiltonian may be gradually updated at each time slice. In some examples, this may be done by defining a time-dependent Hamiltonian of the form: H(t) = A(T) Hᵢₙᵢₜ + B(t) H_{problem}, where A(t) and B(t) are interpolation functions (e.g., linear or sigmoid), with A(0) = 1, B(0) = 0. Rather than completely re-setting up new MPOs each iteration, the MPO representing the combined Hamiltonian may be updated at each time step using time-dependent weights (e.g. the first, second, third and fourth weights). The tensor network may evolve under this gradually shifting Hamiltonian.

It will be appreciated that although two iterations with different weights are described herein, this may be an abstraction for the purposes of demonstrating how the Hamiltonian may shift over time. In some embodiments of the method of executing the one or more simulations of the quantum adiabatic process, this may be performed over many small steps. That is, instead of re-setting up entirely new MPOs at each step, some embodiments may instead adjust the coefficients in the combined Hamiltonian used for time evolution in, for example, each TEBD step.

It will further be appreciated that sampling multiple ground states may not require re-initializing with different initial conditions in the sense of changing the Hamiltonians or the setup. The initial conditions, including the initial Hamiltonian and the problem Hamiltonian, may remain fixed across runs. Instead, because the simulation is probabilistic, each execution (even with the same inputs) may collapse into a different ground state due to variations in the random sampling during measurement. As such, sampling multiple ground states may involve re-running the same simulation multiple times, often with different random seeds.

Executing the one or more simulations of the quantum adiabatic process may further include the one or more simulations including a number of simulations, the number corresponding to the state count.

As well, the first weight, second weight, third weight, and fourth weight may be determined based on the processing time. As noted above, processing time may correspond to the annealing schedule. This may reflect how, in quantum annealing or its classical simulations, the system may gradually shift from the initial Hamiltonian to the problem Hamiltonian over a defined time interval.

The above-described methods may be implemented on one or more computing devices. For example, a general-purpose processor may carry computer instructions to perform steps 102, 104, 106, and 108. In some embodiments, multiple computing devices may be used to perform the steps of method 100. For example, step 104 may be implemented on specialty hardware suitable for processing tensor networks, such as one or more paralleled Graphics Processing Units (GPU).

The randomly generated numbers may be used in applications such as Monte Carlo simulation. For example, a Monte Carlo simulation technique may be used to simulate the properties of a material system. The Monte Carlo simulation may be dependent on the generation of high-quality random numbers in order to sample probability distributions of configurations of the material at different temperatures. Every time a new configuration of the system is produced, the configuration may be accepted or rejected depending on a probability. The probability may be dependent on a temperature, as well as a sampling based on random numbers. Method 100 may be implemented to efficiently produce a high-quality random number using quantum-inspired quantum simulation to determine whether or not to accept the configuration.

As noted above, the probability may be dependent on a temperature, as well as a sampling based on random numbers. It will be appreciated that, in some embodiments, the probability may be randomly sampled, not the temperature. For example, in a Monte Carlo simulation, the temperature may be a fixed parameter, which may be set externally (e.g. to explore system behaviour at a certain thermodynamic condition). The random number may be used to sample whether a new configuration is accepted, such as by using the Metropolis criterion, although other criteria may also be possible. For example, a new configuration may be accepted under the Metropolis criterion if r ≤ exp(-ΔE / kT), wherein r is a uniform random number in [0, 1] and T is the temperature. In this context, method 100 may be used to generate the random number r used in the acceptance decision. The temperature may be input, not randomized. Of course, it will be appreciated that other methods or criteria for randomly sampling the probability may also be possible.

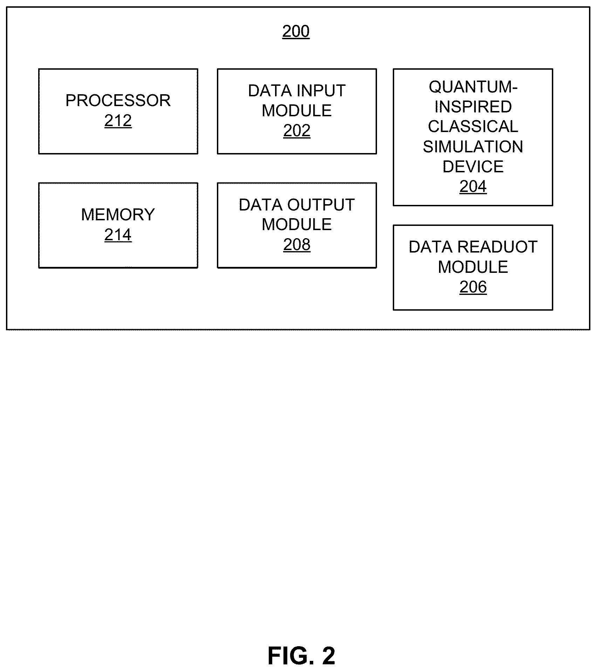

Reference is next made to FIG. 2, which shows an example system 200 for generating random numbers. The system 200 may be quantum-inspired. The system 200 may serve a function in cybersecurity and encryption by producing random numbers through quantum simulation. The system 200 may include several components that work in tandem to achieve its purpose. System 200 may contain a processor 212, a memory 214, a data input module 202, a quantum-inspired classical simulation device 204, a data readout module 206, and a data output module 208. Processor 212 may be one or more processing devices capable of carrying out machine instructions to perform the functions of modules 202, 206, 208 and device 204. Memory 214 may be any memory capable of storing machine instructions for carrying out the functions of components 202, 204, 206, and 208.

The components of system 200 may be implemented on a computing device. For example, a general-purpose processor may carry out computer instructions to execute the functionality of modules 202, 204, 206, and 208. System 200 may be used to implement the steps of method 100. In some embodiments, the various components may be implemented in parts on multiple different processors, devices, or computers. For example, modules 202, 206, and 208 may be implemented on a processor of a personal computing device while device 204 may be implemented on a specialized computing device. In some embodiments, modules 202, 204, 206, and 208 may be combined together into one or more modules.

Data input module 202 may be responsible for handling the input data of the system. Data input module 202 may receive input data that contains numerical values corresponding to local magnetic fields for each quantum bit, the annealing time, and the number of ground states to be sampled. These parameters may be suitable for setting up the initial conditions of the quantum simulation. In some further embodiments, data input module 202 may also handle the output data of the system, such as in combination with one or more other modules.

Quantum-inspired classical simulation device 204 may be a classical computing device that is operable to simulate the quantum adiabatic process. Device 204 may employ tensor networks to model the evolution of the quantum state, with the Hamiltonian defined by local magnetic fields in the Z direction. This simulation may represent an imperfect adiabatic evolution, which is representative of a real quantum annealer's behavior.

Data readout module 206 may measure the state of the quantum bits at the end of the simulation. This measurement may determine the outcomes of the quantum processes that have been classically simulated. The data readout module may produce one or more simulated values based on the one or more simulated quantum bits.

Data output module 208 may be configured to output one or more output values based on the one or more simulated values. After the simulation concludes, data output module 208 may convert the quantum bit values into a string of classical bits, which constitutes the system's output. The process is governed by tensor network algorithms, such as time-evolving block decimation and time-dependent DMRG, to ensure accurate representation of the quantum system's dynamics throughout the simulation. It should be noted that in some embodiments, data input module 202 and data output module 208 can be combined into one module.

The data input module 202 and data output module 208 play roles in handling the input and output processes of a quantum-inspired random number generation system. Modules 202 and 208 may ensure the flow and integrity of data throughout the simulation. In some embodiments, data input module 202 and data output module 208 may be combined, such that a single module may perform the functions of both data input module 202 and data output module 208.

In some embodiments, data input module 202 may contain a quantum data processing module, which may process quantum-specific inputs such as local magnetic fields and ground state counts. In other embodiments, data input module 202 may perform all the functionality of a quantum data processing module, and so a separate or distinct quantum data processing module may not be included in system 200. This functionality of processing quantum-specific inputs may be integral to the ability of system 200 to produce random numbers.

In the data input module 202, the process begins with the reception of a data set, a processing time, and a state count. The data set may contain numerical values that correspond to local magnetic fields to be applied to each quantum bit within the quantum annealer. This data set may define the quantum system's initial conditions. The processing time may be defined as an annealing time and may determine the duration over which the system evolves. The state count may correspond to a number of ground states that the system will sample, which is linked to the unpredictability of the random numbers generated.

As noted above, in some embodiments, data input module 202 may include a quantum data processing module (not depicted). This quantum data processing module may process the quantum-specific information, ensuring that the simulation device receives accurate parameters to model the quantum annealer's behavior. This sub-component may translate the input data into a form that is compatible with the simulation algorithms, which simulate the quantum annealer's adiabatic evolution. It will be appreciated that in other embodiments, data input module 202 may perform all the functions of the quantum data processing module and a separate or distinct quantum data processing module may not be included in system 200.

The data output module 208 may manage the conversion of the simulation's outcome into a usable format. After the simulation concludes, the system produces a string of classical bits. This conversion from quantum states to classical information facilitates the application of the generated random numbers in processes such as cryptographic systems or stochastic simulations. The data output module 208 serves as the interface between the quantum-inspired processes and the classical output, ensuring the system's functionality and the utility of its output.

The quantum-inspired classical simulation device 204 is central to the system's ability to simulate quantum annealing processes. Device 204 may be responsible for running a simulation of a quantum process for the generation of random numbers, which may have applications in fields such as cybersecurity. Device 204 operates by simulating an imperfect adiabatic evolution, which is based on a Hamiltonian that includes only local magnetic fields in the Z direction. This simulation is initiated once the data input module has provided the input data, which includes a set of numbers representing the local magnetic fields, the annealing time, and the number of ground states to be sampled.

As already discussed, quantum-inspired classical simulation device may manage the simulation of the quantum system's dynamics. Quantum-inspired classical simulation device 204 may utilize tensor network methods, including simple and full updates of tensors, time-evolving block decimation, time-dependent DMRG, and tangent space methods, as discussed above. These methods may be applied to accurately represent the evolution of the quantum system over time. The quantum-inspired classical simulation device 204 may be designed to adhere to these standard procedures, which facilitate the accurate simulation of quantum systems.

The output of device 204 includes the simulated qubits at the conclusion of the simulation process. This output is indicative of the system's ability to replicate the quantum annealing process through a quantum-inspired simulation. Device 204 thus plays a role in the system's function of generating random numbers through the simulation of quantum annealing.

Data readout module 206 may be a key element in the quantum-inspired random number generation system. This component becomes active at the conclusion of the quantum simulation process, where the simulated qubits have experienced an adiabatic evolution. This evolution is designed to guide the system into a low-energy state, reflective of the ground state of the Hamiltonian that characterizes the system.

Data readout module 206 accurately measures the values of these qubits at the end of the simulation. This measurement process may involve interpreting the probabilistic states of qubits that are in superposition. The technique used may be similar to a quantum measurement in an actual quantum system, where the superposition collapses into a defined state.

The purpose of this measurement is to facilitate the data output module 208 converting the quantum information into a classical format that can be processed or analyzed further, and to generate a string of random numbers. Data output module 208 may operate under the condition that the simulation process has concluded, which may be determined by the annealing time set in the input data. The result of this measurement is a series of classical bits that denote the final state of each qubit.

The functionality of the data readout module 206 and data output module 208 may facilitate the transition from quantum-inspired simulation to applications such as cryptography, where the randomness of the output string may be desirable. Without this component, the simulated quantum information would remain inaccessible for practical use.

It will be appreciated that in some embodiments, data readout module 206 and data output module 208 may be combined into a single module. In other embodiments, one or more functions of data readout module 206 may be moved into data output module 208 and/or one or more functions of data output module 208 may be moved into data readout module 206.

While the applicant's teachings described herein are in conjunction with various embodiments for illustrative purposes, it is not intended that the applicant's teachings be limited to such embodiments as the embodiments described herein are intended to be examples. On the contrary, the applicant's teachings described and illustrated herein encompass various alternatives, modifications, and equivalents, without departing from the embodiments described herein, the general scope of which is defined in the appended claims.

## Claims

1. A system for generating random numbers, the system comprising:
one or more processors, the one or more processors configured to implement:
a data input module configured to receive:
a data set;
a processing time; and
a state count;
a quantum-inspired classical simulation device configured to execute one or more simulations of a quantum adiabatic process based on the data set, the processing time, the state count, an energy function, and one or more network structures, the one or more network structures comprising one or more initial simulated quantum bits, thereby producing one or more evolved simulated quantum bits;
a data readout module configured to measure one or more simulated values based on the one or more evolved simulated quantum bits at the end of each simulation of the quantum adiabatic process; and
a data output module configured to output one or more output values based on the one or more simulated values, the one or more output values comprising one or more classical bits.

2. The system of claim 1, wherein the data set comprises a set of numbers corresponding to a plurality of local magnetic fields to be applied to the one or more simulated quantum bits.

3. The system of any of claims 1 or 2, wherein the state count is used to determine a quantity of the one or more simulations to be executed, the quantum-inspired classical simulation device configured to execute each of the one or more simulations with a different random seed.

4. The system of any of claims 1 to 3, wherein the one or more network structures comprise one or more tensor networks.

5. The system of any of claims 1 to 4, wherein the adiabatic process comprises an imperfect adiabatic evolution.

6. The system of any of claims 1 to 5, wherein:
the energy function comprises a Hamiltonian, the Hamiltonian comprising only local magnetic fields in a single direction.

7. The system of any of claims 1 to 6, wherein the one or more output values comprises a random string of classical bits.

8. The system of any of claims 4 to 7, wherein the one or more tensor networks comprises one or more of: Matrix Product States, Projected Entangled Pair States, and Lattice-Free Tensor Networks.

9. The system of any of claims 1 to 8, wherein the executing the one or more simulations of the quantum adiabatic process comprises:
initializing the one or more network structures based on the one or more simulated quantum bits, the energy function, the data set, an initialization weight associated with the energy function, and a problem weight associated with the data set;
applying one or more tensor network evolution algorithms to the one or more network structures with the initialization weight at a first value and the problem weight at a second value; and
applying the one or more tensor network evolution algorithms to the one or more network structures with the first weight at a third value, the third value being lower than the first value, and the problem weight at a fourth value, the fourth value being lower than the third value, and
wherein:
the one or more simulations comprises a number of simulations, the number corresponding to the state count; and
the first weight, second weight, third weight, and fourth weight are determined based on the processing time.

10. The system of claim 9, wherein the one or more tensor network evolution algorithms comprises at least one of: simple and full update of tensors, time-evolving block decimation, time-dependent DMRG, and tangent space methods.

11. A computer-implemented method for generating random numbers, the method comprising:
receiving, at a data input module, a data set, a processing time, and a state count;
executing, at a quantum-inspired classical simulation device, one or more simulations of a quantum adiabatic process based on the data set, the processing time, the state count, an energy function, and one or more network structures, the one or more network structures comprising a representation of one or more initial simulated quantum bits, thereby producing one or more evolved simulated quantum bits;
measuring, at a data readout module, one or more simulated values based on the one or more evolved simulated quantum bits at the end of each simulation of the quantum adiabatic process; and
outputting, at a data output module, one or more output values based on the one or more simulated values, the one or more output values comprising one or more classical bits.

12. The method of claim 11, wherein the data set comprises a set of numbers corresponding to a plurality of local magnetic fields to be applied to the one or more simulated quantum bits.

13. The method of any of claims 11 or 12, wherein the state count is used to determine a quantity of the one or more simulations to be executed, the quantum-inspired classical simulation device configured to execute each of the one or more simulations with a different random seed.

14. The method of any of claims 11 to 13, wherein:
the energy function comprises a Hamiltonian, the Hamiltonian comprising only local magnetic fields in a single direction.

15. The method of any of claims 11 to 14, wherein the executing the one or more simulations of the quantum adiabatic process comprises:
initializing the one or more network structures based on the one or more simulated quantum bits and the energy function, the data set, an initialization weight associated with the energy function, and a problem weight associated with the data set; and
applying one or more tensor network evolution algorithms to the one or more network structures with the initialization weight at a first value and the problem weight at a second value, and
applying the one or more tensor network evolution algorithms to the one or more network structures with the first weight at a third value, the third value being lower than the first value, and the problem weight at a fourth value, the fourth value being lower than the third value, and
wherein:
the one or more simulations comprises a number of simulations, the number corresponding to the state count; and
the first weight, second weight, third weight, and fourth weight are determined based on the processing time.
